Europäisches Patentamt

European Patent Office

Office européen des brevets

(11) Veröffentlichungsnummer: **0 262 355**
A1

## (12) EUROPÄISCHE PATENTANMELDUNG

(21) Anmeldenummer: **87111646.3**

(22) Anmeldetag: **12.08.87**

(51) Int. Cl.³: **B 62 D 1/04**

(30) Priorität: **01.10.86 DE 3633338**

(43) Veröffentlichungstag der Anmeldung:
**06.04.88 Patentblatt 88/14**

(84) Benannte Vertragsstaaten:
**DE ES FR GB IT**

(71) Anmelder: **ALFRED TEVES GMBH**
**Guerickestrasse 7**
**D-6000 Frankfurt/Main 90(DE)**

(72) Erfinder: **Creydt, Martin, Dr.**
**Marienberger Strasse 37**
**D-6230 Frankfurt 80(DE)**

(74) Vertreter: **Grau, Ulf**
**c/o ALFRED TEVES GMBH Guerickestrasse 7**
**D-6000 Frankfurt (M) 90(DE)**

(54) **Metalleinsatz, insbesondere Monometalleinsatz für Lenkräder.**

(57) Die Erfindung betrifft einen Metalleinsatz, insbesondere Monometalleinsatz für Lenkräder. Zur Reduzierung von Wärmebehandlungs- und/oder Dimensionierungsproblemen ist vorgesehen, daß der Einsatz aus einer Zinklegierung besteht, mit einem Gehalt von 10% bis 40% Aluminium und bis zu 6% sonstige Elemente.

FIG.1

ALFRED TEVES GMBH    —/—    06. August 1987
Frankfurt am Main           ZL/Gr/ro
                            EP 6086    2224P

                            Dr. Creydt  - 1

Metalleinsatz, insbesondere Monometalleinsatz für Lenkräder

Die Erfindung betrifft einen Metalleinsatz, insbesondere einen Monometalleinsatz für Lenkräder, gemäß dem Oberbegriff des Patentanspruchs 1.

Leichtmetalleinsätze (Skelette) für Lenkräder sind bereits in den verschiedensten Ausgestaltungen bekannt geworden. Aus Gewichts- und Wirtschaftlichkeitsgründen sind verschiedentlich derartige Leichtmetalleinsätze für Lenkräder auch einteilig ausgeführt worden. Die Einführung in die Serienproduktion scheiterte jedoch hierbei an Dimensionierungs- und/oder Wärmebehandlungsproblemen.

Der Erfindung liegt daher die Aufgabe zugrunde, einen Metalleinsatz, insbesondere Monometalleinsatz für Lenkräder zu schaffen, bei dem derartige Wärmebehandlungs- und Dimensionierungsprobleme verringert sind.

Diese Aufgabe wird erfindungsgemäß dadurch gelöst, daß der Einsatz aus einer Zink-Legierung besteht, mit einem Gehalt von 10% bis 40% Alumimium und bis zu etwa 6% sonstiger Elemente.

Mit der erfindungsgemäßen Lösung wird ein Leichtmetalleinsatz für Lenkräder geschaffen, bei dem auch in Monometallausführung Wärmebehandlungs- und Dimensionierungsprobleme weitestgehend behoben sind. Typische Gießfehler, die eine Verwendung als Sicherheitsteile nur mit unverhälnismäßig hohem Prüfaufwand erlauben, werden vermieden. Mit dem erfindungsgemäßen Metalleinsatz kann eine ausreichende Masse im Kranz des Leichtmetalleinsatzes konzentriert werden, so daß das nötige spezifizierte Trägheitsmoment erreicht wird.

Mit anderen Worten werden die bekannten Probleme umgangen durch Verwendung einer hochfesten, aluminiumhaltigen Zink-Legierung. Die erforderliche Wärmebehandlung besteht überwiegend lediglich in einer Gefügestabilisierung bei rund 320°C, wobei die Verzüge klein bleiben. Wegen der niedrigen Gieß- und Überhitzungstemperatur ist die Gasaufnahme und damit die Porosität relativ gering. Die Legierungen eignen sich besonders für Gießverfahren hoher Produktivität, wie Kaltkammer-Squeezecasting und Reocasting. Die hohen Festigkeiten bei zugleich günstigem spezifischen Gewicht erlauben die Konstruktion von Skeletten, deren wesentliche Masse im Kranz konzentriert ist, wodurch die geforderten Massenträgheitsmomente eingestellt werden können, bei gleichzeitiger Gewichtsreduktion gegenüber dem normalen Stahl-/Aluminiumdruckguß-Skelett.

Ein Ausführungsbeispiel für die Anwendung der Erfindung ist in der Zeichnung dargestellt und im folgenden beschrieben:

Es zeigen:

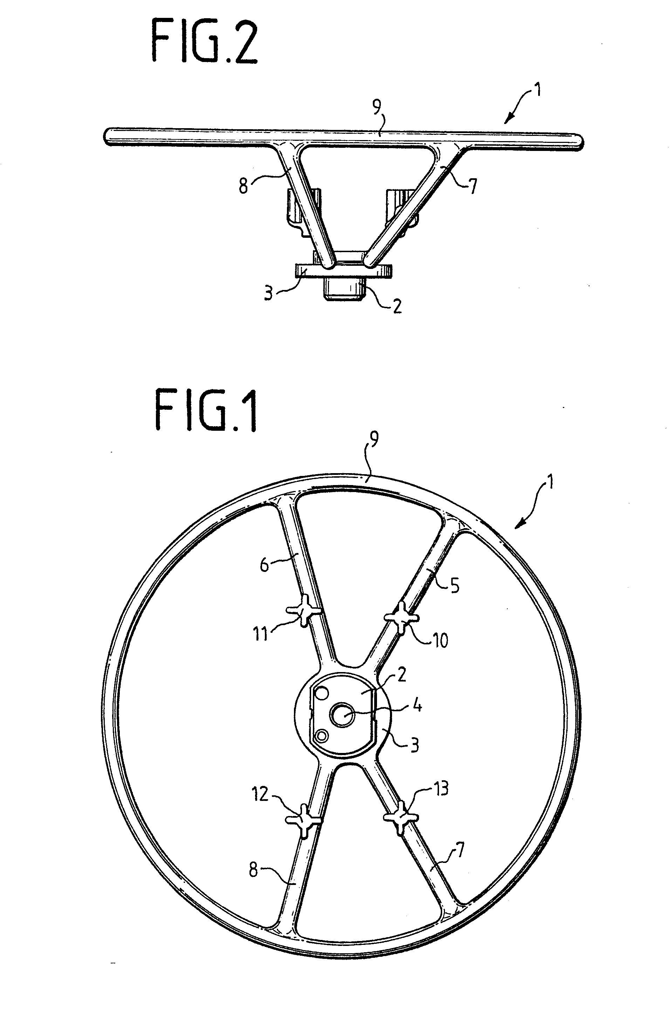

Fig. 1    eine Draufsicht auf ein Lenkradskelett; und

Fig. 2    eine Seitenansicht des Lenkradskelettes gemäß
          Fig. 1.

Das in der Zeichnung dargestellte Lenkradskelett 1 weist ein abgestuftes Nabenteil 2 auf, das mit einem umlaufenden Flanschabschnitt 3 und einer zentralen Öffnung 4 versehen ist. Ausgehend vom zentralen Nabenteil erstrecken sich vier Speichen 5,6,7,8, von denen jeweils zwei in einem spitzen Winkel zueinander angeordnet sind, zu einem runden Kranzteil 9. An den Speichen 5,6,7,8 sind sternförmige Halteteile 10,11,12,13 angeordnet, die zur Befestigung weiterer Lenkradteile, wie Signalplatte und dergl. dienen. Das Nabenteil 2, die Speichen 5,6,7,8, das Kranzteil 9 und die Halteteile 10,11,12,13 sind einstückig miteinander verbunden bzw. geformt.

Bei einer bevorzugten Ausführungsform eines Monometalleinsatzes weist die Zinklegierung 27% Aluminium, 2,5% Kupfer und 0,02% Magnesium auf. Die erforderliche Wärmebehandlung besteht im wesentlichen lediglich in einer Gefügestabilisierung bei ca. 320°C.

Patentansprüche

1. Metalleinsatz, insbesondere Monometalleinsatz, für Lenkräder, dadurch g e k e n n z e i c h n e t, daß der Einsatz aus einer Zink-Legierung besteht, mit ei- nem Gehalt von 10% bis 40% Aluminium und bis zu 6% sonstige Elemente.

2. Metalleinsatz nach Anspruch 1, dadurch g e k e n n - z e i c h n e t, daß der Aluminiumgehalt im Bereich von 25% bis 30%, insbesondere bei 27% liegt.

3. Metalleinsatz nach einem der vorhergehenden Ansprü- che, dadurch g e k e n n z e i c h n e t, daß die Le- gierung etwa 2,5% Kupfer aufweist.

4. Metalleinsatz nach einem der vorhergehenden Ansprü- che, dadurch g e k e n n z e i c h n e t, daß die Le- gierung etwa 0,02% Magnesium aufweist.

5. Verfahren zur Herstellung eines Metalleinsatzes, insbesondere eines Monometalleinsatzes, für Lenkräder, dadurch g e k e n n z e i c h n e t, daß der Metall- einsatz aus einer Zink-Legierung gegossen wird, die einen Gehalt von 10% bis 40% Aluminium und bis 6% sonstiger Elemente aufweist.

6. Verfahren zur Herstellung eines Metalleinsatzes nach einem der vorhergehenden Ansprüche, dadurch g e - k e n n z e i c h n e t, daß der Metalleinsatz einer Wärmebehandlung, insbesondere im Bereich von 250°C bis 350°C, speziell etwa 320°C, unterzogen wird.

0262355

P 6086

# FIG.2

# FIG.1

Dr Crevdt - 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 159 341 (L. MURDEN PAGE) * Seite 1, Zeilen 24-28; Figur 1 * --- | 1,3,4,5,6 | B 62 D 1/04 |
| Y | DE-C- 700 011 (METALLGES. AG) * Seite 1, Zeilen 3-6,22-27 * --- | 1,3,4,5,6 | |
| A | FR-A- 552 351 (BENEDETTI) * Seite 1, Zeilen 39-41; Anspruch 3; Figur 1 * --- | 1,5 | |
| A | GB-A-1 373 497 (A.G. STOTE) * Seite 1, Zeilen 64-72; Anspruch 5; Figur 1 * --- | 1,5 | |
| A | US-A-3 972 743 (BALL CORP.) * Zusammenfassung * ----- | 2,3,4,6 | |

|  |
|---|
| **RECHERCHIERTE SACHGEBIETE (Int. Cl.4)** |
| B 62 D 1/00 C 22 C 18/00 C 22 F 1/00 B 22 D 25/00 B 22 D 21/00 |

Der vorliegende Recherchenbericht wurde für alle Patentansprüche erstellt

| Recherchenort | Abschlußdatum der Recherche | Prüfer |
|---|---|---|
| DEN HAAG | 04-01-1988 | TOPP-BORN S. |